**Europäisches Patentamt**

**European Patent Office**

**Office européen des brevets**

(19)

(11) Numéro de publication : **0 373 049 B1**

# FASCICULE DE BREVET EUROPEEN

(12)

(45) Date de publication du fascicule du brevet :
09.12.92 Bulletin 92/50

(51) Int. Cl.⁵ : **F16B 5/02**

(21) Numéro de dépôt : **89403333.1**

(22) Date de dépôt : **30.11.89**

(54) **Dispositif de fixation à un élément de structure interne d'un véhicule automobile d'une pièce d'équipement à positionner relativement à un élément de structure externe du véhicule.**

(30) Priorité : **08.12.88 FR 8816151**

(43) Date de publication de la demande :
**13.06.90 Bulletin 90/24**

(45) Mention de la délivrance du brevet :
**09.12.92 Bulletin 92/50**

(84) Etats contractants désignés :
**DE GB IT**

(56) Documents cités :
**GB-A- 2 119 467**
**US-A- 4 108 407**

(73) Titulaire : **AUTOMOBILES PEUGEOT**
**75, avenue de la Grande Armée**
**F-75116 Paris (FR)**
Titulaire : **AUTOMOBILES CITROEN**
**62 Boulevard Victor-Hugo**
**F-92200 Neuilly-sur-Seine (FR)**

(72) Inventeur : **Robert, Christian**
**Hameau des Berges 4 Allée des Lauriers**
**F-78510 Triel sur Seine (FR)**

(74) Mandataire : **Durand, Yves Armand Louis et al**
**CABINET WEINSTEIN 20, Avenue de**
**Friedland**
**F-75008 Paris (FR)**

EP 0 373 049 B1

## Description

La présente invention concerne un dispositif de fixation d'une pièce d'équipement d'un véhicule automobile à un élément de structure interne de celui-ci tel qu'une tôle intérieure de carrosserie, de façon que la pièce d'équipement soit en alignement parfait avec l'élément de structure externe du véhicule, tel qu'une tôle extérieure de carrosserie de celui-ci tout en étant rigidement fixé à la tôle intérieure de carrosserie sans contrainte.

US-A-4 108 407 décrit un dispositif d'ajustement comprenant nécessairement un élément fileté intérieurement 16 fixé dans une pièce 10, un élément d'ajustement 28 à filetage extérieur très fin pour le vissage de l'élément 16, des sièges sphériques 34, 36 réalisés aux deux extrémités libres de l'élément d'ajustement 28 pour recevoir respectivement des bagues de forme conjuguée 42, 46 de façon à autoriser un déplacement relatif d'une pièce 12, un écrou 62 de blocage de l'élément 28 dans l'élément 16, et une vis de blocage 54 traversant les bagues 42, 46 et l'élément 28 pour bloquer la pièce 12.

Cependant, ce dispositif connu est relativement coûteux puisqu'il nécessite d'une part l'usinage d'un filetage très fin sur l'élément d'ajustement 28 et d'un trou taraudé correspondant dans l'élément 16 et d'autre part l'usinage de deux sièges sphériques 34, 36 aux deux extrémités de l'élément d'ajustement 28.

L'invention a pour but d'éliminer les inconvénients ci-dessus en proposant un dispositif de fixation d'une structure très simple relativement aux dispositifs de fixation connus jusqu'à maintenant et permettant un assemblage simple, rapide, qui peut être effectué à l'aide d'un robot ou autre manipulateur équivalent.

A cet effet, le dispositif de fixation de l'invention, du type comprenant un fourreau fixé à travers l'élément de structure interne par un filetage réalisé sur au moins une partie de sa surface périphérique externe et une vis de fixation de la pièce d'équipement au fourreau traversant ce dernier, est caractérisé en ce que le fourreau comprend une partie cylindrique de réception et de centrage d'une partie tubulaire correspondante de la pièce d'équipement et à fond venant en butée contre l'extrémité libre de la partie tubulaire de la pièce d'équipement, le fourreau comprenant un embout creux d'entraînement en rotation de celui-ci, dans lequel est logée la tête de la vis de fixation en y étant liée en rotation et qui est relié au fourreau par l'intermédiaire d'une zone frangible se rompant sous un couple de vissage prédéterminé du fourreau en butée sur la pièce d'équipement.

Selon une caractéristique de l'invention, la vis de fixation précitée traverse coaxialement la partie tubulaire précitée et a une partie d'extrémité filetée se vissant dans un trou taraudé correspondant de la pièce d'équipement.

Selon une autre caractéristique de l'invention, l'embout creux précité a une forme extérieure hexagonale et une forme intérieure également hexagonale conjuguée à la forme hexagonale de la tête de la vis de fixation précitée.

A l'état assemblé du dispositif, la pièce d'équipement est bloquée sur l'élément de structure externe.

Avantageusement, la vis de fixation a un téton de centrage se logeant dans un trou correspondant de la pièce d'équipement.

De préférence, le fourreau et l'embout creux précités sont réalisés en une matière plastique relativement rigide.

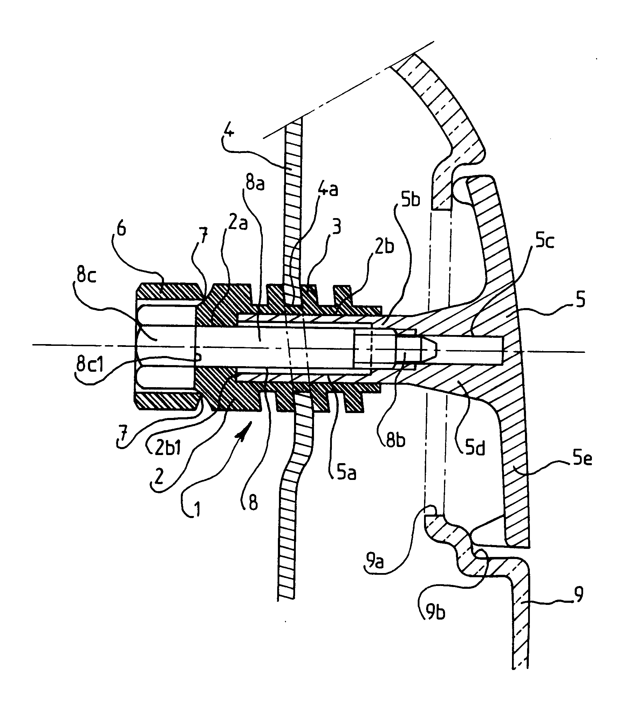

L'invention sera mieux comprise, et d'autres buts, caractéristiques, détails et avantages de celle-ci apparaîtront plus clairement au cours de la description explicative qui va suivre faite en référence au dessin schématique annexé donné uniquement à titre d'exemple illustrant un mode de réalisation de l'invention, et dans lequel est représenté en coupe le dispositif de fixation conforme à l'invention.

Sur la figure, le dispositif de fixation 1 conforme à l'invention comprend un fourreau 2 dont une partie de la surface périphérique externe est filetée comme indiqué en 3 de façon à être vissée dans et à travers un élément de structure interne 4, tel qu'une tôle de carrosserie intérieure d'un véhicule automobile. Comme représenté, l'épaisseur de la paroi de l'élément 4 est légèrement inférieure à l'espace séparant deux filets successifs de la partie filetée 3 et le diamètre de l'orifice 4a de passage de la partie filetée 3 est légèrement supérieur au diamètre du noyau au fond des filets de la partie filetée du fourreau 2. Ce dernier, en position vissée à l'élément 4, est approximativement perpendiculaire à l'élément 4.

La partie creuse du fourreau 2, traversant de part en part celui-ci, comprend un alésage cylindrique 2a de relativement courte longueur prolongé par un second alésage cylindrique 2b de plus grand diamètre et de plus grande longueur. L'alésage cylindrique 2b est destiné à recevoir et centrer une partie tubulaire correspondante 5a d'une pièce d'équipement 5 du véhicule automobile. L'extrémité libre de la partie tubulaire 5a est en appui, à l'état assemblé du dispositif 1, contre le fond 2b1 de l'alésage 2b, lequel fond constitue ainsi une butée limitant le déplacement axial du fourreau 2 relativement à la pièce d'équipement 5 lors du vissage du fourreau.

Un embout creux 6, propre à entraîner en rotation le fourreau 2 pour le vissage de ce dernier dans l'élément 4, est relié au fourreau 2 par l'intermédiaire d'une zone frangible 7 se rompant sous un couple de vissage prédéterminé du fourreau 2 en butée sur la pièce d'équipement 5. De préférence, le fourreau 2 et l'embout creux 6 sont réalisés en une seule pièce en une matière plastique relativement rigide. A titre d'exemple, la zone frangible 7 peut être constituée par un certain nombre de pattes de rupture s'étendant sensiblement parallèlement à l'axe longitudinal du fourreau 2 et régulièrement espacées sur la circonférence d'un cercle coaxial à l'axe du fourreau ou tout simplement par une zone annulaire de raccordement de l'embout 6 au fourreau 2 de très faible épaisseur faisant ainsi office d'amorce de rupture.

Le dispositif de fixation 1 comprend de plus une vis de fixation 8 de la pièce d'équipement 5 au fourreau 2, s'étendant coaxialement dans les alésages 2a et 2b en traversant la partie tubulaire 5a de la pièce d'équipement 5 et qui a une partie d'extrémité de son fût 8a filetée se vissant dans un trou taraudé correspondant 5b de la pièce 5 réalisé en prolongement de la partie tubulaire 5a coaxialement à celle-ci. Le trou taraudé 5b est également prolongé coaxialement à celui-ci par un trou borgne 5c de la pièce 5 dans une partie duquel est logé un téton de centrage 8b de la vis de fixation 8. Le fût 8 de la vis 8 a un diamètre externe légèrement inférieur au diamètre de l'alésage 2a et inférieur au diamètre interne de la partie tubulaire 5a de la pièce 5. La tête 8c de la vis 8 est du type à six pans extérieurs de forme conjuguée aux six pans creux ou intérieurs de l'embout 6 dont la forme extérieure est également hexagonale. La tête 8c de la vis 8 est logée intégralement dans la partie creuse de l'embout 6 et se trouve en appui par son épaulement 8c1 sur une face dressée correspondante du fourreau 2 à l'état assemblé du dispositif 1.

L'élément de structure interne 4 est espacé d'un élément de structure externe 9, tel qu'une tôle de carrosserie extérieure du véhicule, comportant une ouverture 9a de passage de l'embase de support 5d de la partie tubulaire 5a et un renfoncement 9b entourant l'ouverture 9a et dans lequel vient se loger, tout en étant en appui au fond de celui-ci, la paroi extrême 5e de la pièce 5 ayant un contour externe correspondant sensiblement au contour interne du renfoncement 9b. A titre d'exemple, la pièce d'équipement 5 peut être constituée par un capot de feu arrière d'un véhicule automobile. L'élément 4 est positionné par rapport à l'élément 9 suivant une certaine tolérance résultant de la tolérance de montage de l'élément 4 relativement à l'élément 9 et d'une tolérance de fabrication. Cette tolérance résultante a donc une valeur inconnue. Le dispositif de fixation 1 permet de rattraper automatiquement le jeu résultant de la tolérance de position de l'élément 4 comme cela ressort des explications ci-dessous relatives au mode d'assemblage des différents composants du dispositif de fixation 1.

L'assemblage de ces composants s'effectue comme suit.

La pièce d'équipement 5 est tout d'abord présentée, par exemple, automatiquement, par un manipulateur ou un robot, sur l'élément de structure extérieure 9 de façon à être positionnée convenablement dans le renfoncement 9a avec la partie tubulaire 5a de la pièce 5 traversant l'orifice 4a de l'élément 4 dans lequel doit être vissé le fourreau 2.

La vis 8 est disposée dans le fourreau 2 avec sa tête 8c noyée dans l'embout creux 6. Le robot ou le manipulateur visse ensuite le fourreau 2 dans l'élément 4 de façon que le fourreau 2 se déplace axialement vers la droite par rapport à la figure le long de la partie tubulaire 5a jusqu'à ce que le fond 2b1 de l'alésage 2b vienne en butée sur l'extrémité libre de la partie tubulaire 5a.

Un couple résistant s'oppose alors au couple de vissage du fourreau 2. Le robot ou le manipulateur continue de tourner le fourreau 2 jusqu'à ce que le couple de vissage rompe la zone frangible 7 reliant l'embout 6 au fourreau 2. Le robot ou le manipulateur continue toujours d'entraîner en rotation l'embout 6 détaché du fourreau 2 de façon à commander la rotation dans le sens du vissage de la vis de fixation 8 qui fixe la pièce d'équipement 5 au fourreau 2 et donc bloque la pièce 5 sur l'élément de structure externe 9. Cet assemblage est effectué sans déformation des éléments de structure interne 4 et externe 9 et de la pièce d'équipement 5. La pièce d'équipement 5 est ainsi fixée rigidement à l'élément de structure interne 4 tout en étant correctement alignée sur l'élément de structure externe 9, d'où une meilleure qualité d'assemblage entre la pièce d'équipement 5 et la carrosserie formée par les éléments 4 et 9. On comprend que le rattrapage de jeu susmentionné est obtenu au moyen du fourreau 2 venant en butée contre la pièce d'équipement 5 et de l'embout de vissage 6 de celui-ci.

L'assemblage du dispositif de fixation 1 a été décrit comme étant effectué automatiquement par un robot ou autre manipulateur équivalent mais il est bien entendu que celui-ci peut être effectué manuellement à l'aide d'une clé appropriée de manoeuvre de l'embout de vissage 6 du fourreau 2.

**Revendications**

1. Dispositif de fixation à un élément de structure interne, tel qu'une tôle de carrosserie intérieure d'un véhicule automobile, d'une pièce d'équipement à positionner relativement à un élément de structure externe, tel qu'une tôle de carrosserie extérieure du véhicule et espacé de l'élément de structure interne, du type comprenant un fourreau (2) fixé à travers l'élément de structure interne (4) par un filetage réalisé sur au moins une partie de sa surface périphérique externe et une vis de fixation de la pièce d'équipement (5) au fourreau (2) traversant le fourreau (2), caractérisé en ce que le fourreau (2) comprend une partie cylindrique (2b) de réception et de centrage d'une partie tubulaire correspondante (5a) de la pièce d'équipement (5) et à fond (2b1) venant en butée contre l'extrémité libre de la partie tubulaire (5a) de la pièce d'équipement (5), ledit fourreau (2) comprenant de plus un embout creux (6) d'entraînement en rotation du fourreau (2), dans lequel est logée la tête (8c) de la vis de fixation (8) en y étant liée en rotation et qui est relié au fourreau (2) par l'intermédiaire d'une zone frangible (7) se rompant sous un couple de vissage prédéterminé du fourreau en butée sur la pièce d'équipement (5).

2. Dispositif selon la revendication 1, caractérisé en ce que la vis de fixation (8) traverse coaxialement la partie tubulaire (5a) et a une partie d'extrémité filetée se vissant dans un trou taraudé (5b) correspondant de la pièce d'équipement (5).

3. Dispositif selon la revendication 1 ou 2,caractérisé en ce qu'à l'état assemblé de celui-ci, la pièce d'équipement (5) est bloquée sur l'élément de structure externe (9).

4. Dispositif selon l'une des revendications précédentes, caractérisé en ce que l'embout creux (6) précité a une forme extérieure hexagonale et une forme intérieure également hexagonale conjuguée à la forme hexagonale de la tête (8c) de la vis de fixation (8) précitée.

5. Dispositif selon l'une des revendications précédentes, caractérisé en ce que la vis de fixation (8) précitée a un téton de centrage (8b) se logeant dans un trou correspondant (5c) de la pièce d'équipement (5).

6. Dispositif selon l'une des revendications précédentes, caractérisé en ce que le fourreau (2) et l'embout creux (6) précités sont réalisés en une matière plastique relativement rigide.

7. Dispositif selon l'une des revendications précédentes, caractérisé en ce que le fourreau (2) et la vis de fixation (8) précités sont apte à être assemblés par un robot ou autre manipulateur équivalent.

**Patentansprüche**

1. Vorrichtung zur Befestigung an einem inneren Gliederungselement, wie einem inneren Blech eines Kraftfahrzeugsaufbaues, eines im Verhältnis zu einem äusseren Gliederungselement, wie einem äusseren Blech eines Fahrzeugsaufbaues zu positionierenden und sich im Abstand von dem inneren Gliederungselement befindenden Ausstattungsstückes, derjenigen Gattung mit einer durch ein über wenigstens einen Teil ihrer äusseren Umfangsfläche gebildetes Gewinde durch das innere Gliederungselement (4) hindurch befestigten Hülse (2) und einer die Hülse (2) durchsetzenden Schraube zur Befestigung des Ausstattungsstückes (5) an der Hülse (2) dadurch gekennzeichnet, dass die Hülse (2) einen zylindrischen Teil (2b) zur Aufnahme und Zentrierung eines entsprechenden rohrförmigen Teiles (5a) des Ausstattungsstücks (5) und mit einem zum Anschlag gegen das freie Ende des rohrförmigen Teiles (5a) des Ausstattungsstücks (5) kommenden Boden (2b1) aufweist, wobei die besagte Hülse (2) ausserdem einen hohlen Ansatz (6) zum Drehantrieb der Hülse (2) aufweist, in welchem der Kopf (8c) der Befestigungsschraube (8) untergebracht ist und drehfest mit diesem verbunden ist und der mit der Hülse (2) über einen brechbaren Bereich (7) verbunden ist, der unter einem vorbestimmten Drehmoment zum Aufschrauben der Hülse bis zum Anschlag an das Ausstattungsstück (5) bricht.

2. Vorrichtung nach Anspruch 1, dadurch gekennzeichnet, dass die Befestigungsschraube (8) den rohrförmigen Teil (5a) koaxial durchsetzt und einen sich in ein entsprechendes Gewindeloch (5b) des Ausstattungsstücks (5) schraubenden Gewindeendteil hat.

3. Vorrichtung nach Anspruch 1 oder 2, dadurch gekennzeichnet, dass im zusammengefügten Zustand derselben das Ausstattungsstücks (5) an dem äusseren Gliederungselement (9) blockiert ist.

4. Vorrichtung nach einem der vorangehenden Ansprüche, dadurch gekennzeichnet, dass der vorgenannte hohle Ansatz (6) eine hexagonalen äussere Gestalt und eine der hexagonalen Gestalt des Kopfes (8c) der vorgenannten Befestigungsschraube (8) formschlüssig entsprechende innere ebenfalls hexagonale Gestalt hat.

5. Vorrichtung nach einem der vorangehenden Ansprüche, dadurch gekennzeichnet, dass die vorgenannte Befestigungsschraube (8) einen sich in einem entsprechenden Loch (5c) des Ausstattungsstücks (5) unterbringenden Zentrierzapfen (8b) hat.

6. Vorrichtung nach einem der vorangehenden Ansprüche, dadurch gekennzeichnet, dass die vorgenannte Hülse (2) und der vorgenannte hohle Ansatz (6) aus einem verhältnismässig steifen Kunststoff gefertigt sind.

7. Vorrichtung nach einem der vorangehenden Ansprüche, dadurch gekennzeichnet, dass die vorgenannten Hülse (2) und Befestigungsschraube (8) geeignet sind, durch einen Roboter oder einen anderen äquivalenten Manipulator zusammengefügt zu werden.

**Claims**

1. Device for the fastening, to an internal structural element such as an inner metal sheet of the body of an automotive vehicle, of a fitting part to be positioned in relation to an external structural element such as an outer metal sheet of the vehicle body and spaced from the internal structural element, of the type comprising a socket (2) fastened through the internal structural element (4) by a threading carried out on at least one portion of its external peripheral surface and a screw for fastening the fitting part (5) to the socket (2) and extending through the socket (2), characterized in that the socket (2) comprises a cylindrical portion (2b) for receiving and centering a corresponding tubular portion (5a) of the fitting part (5) and has a bottom (2b1) abutting against the free end of the tubular portion (5a) of the fitting (5), the said socket (2) moreover comprising a hollow end portion (6) for rotating the socket (2) and in which is accommodated the head (8c) of the fastening screw (8) while being made fast in rotation thereto and which is connected to the socket (2) through the medium of a frangible zone (7) breaking under a predetermined torque for screwing the socket home in abutment against the fitting part (5).

2. Device according to claim 1, characterized in that the fastening screw (8) coaxially extends through the tubular portion (5a) and has a threaded end portion adapted to be screwed into a corresponding tapped hole (5b) of the fitting part (5).

3. Device according to claim 1 or 2, characterized in that in the assembled condition thereof, the fitting part (5) is blocked on the external structural element (9).

4. Device according to one of the foregoing claims, characterized in that the aforesaid hollow end portion (6) has an external hexagonal shape and an internal also hexagonal shape complementary of the hexagonal shape of the head (8c) of the aforesaid fastening screw (8).

5. Device according to one of the foregoing claims, characterized in that the aforesaid fastening screw (8) has a centering teat (8b) received into a corresponding hole (5c) of the fitting part (5).

6. Device according to one of the foregoing claims, characterized in that the aforesaid socket (2) and hollow end portion (6) are made from a relatively rigid plastics material.

7. Device according to one of the foregoing claims, characterized in that the aforesaid socket (2) and fastening screw (8) are adapted to be assembled by a robot or other equivalent manipulator.